# EUROPEAN PATENT SPECIFICATION

(11) **EP 2 197 097 B1**
(45) Date of publication and mention of the grant of the patent: **30.04.2014**
(21) Application number: 08836629.9
(22) Date of filing: 03.10.2008
(51) Int. Cl.: H02M 7/48, H01F 27/32, H01F 30/00, H02K 11/00, H02K 7/14

(54) **Inverter-integrated electric compressor and coil component for inverter thereof**
Elektrischer Verdichter mit integriertem Umrichter und Spulenkomponente für ein Umrichtergerät
Compresseur électrique intégrant un inverseur et son composant de bobine pour un dispositif d'inversion

(30) Priority: 05.10.2007 JP 2007262095
(43) Date of publication of application: 16.06.2010
(73) Proprietor: Mitsubishi Heavy Industries, Ltd., Tokyo 108-8215 (JP)
(72) Inventor: WATANABE, Takayuki, Kiyosu-shi Aichi 452-8561 (JP); YOGO, Ichiro, Kiyosu-shi Aichi 452-8561 (JP); NAKANO, Koji, Nagoya-shi Aichi 453-8515 (JP); KAMITANI, Hiroyuki, Kiyosu-shi Aichi 452-8561 (JP)
(74) Representative: Henkel, Breuer & Partner
(86) International application number: PCT/JP2008/068022
(87) International publication number: WO 2009/044841

(56) References cited:
- EP-A2- 1 840 378
- EP-A2- 1 840 378
- JP-A- 2003 158 019
- JP-A- 2003 158 019

## Description

### Technical Field

The present invention relates to an inverter-integrated electric compressor, having an integrated inverter, suitable for use in a compressor for an air conditioner installed in a vehicle and also to a coil component for the inverter.

### Background Art

Various inverter-integrated electric compressors having integrated inverters have recently been proposed as compressors for air conditioners installed in vehicles. In a typical inverter-integrated electric compressor for vehicle air conditioners, an inverter-accommodating section (inverter box) is disposed on the periphery of a housing into which an electric motor and a compression mechanism are built, and an inverter is installed in the inverter-accommodating section to convert DC power supplied from a high-voltage power supply into three-phase AC power and supply the power to the electric motor so that the rotational speed of the electric compressor can be changed depending on the air-conditioning load.

Such an inverter includes high-voltage components, such as a smoothing capacitor (capacitor), an inductor coil, and a common-mode coil, as its components (see, for example, JP 3827158 B). Of these high-voltage components, the smoothing capacitor (capacitor) is typically protected by a metal outer case (see, for example, JP 2006-196680 A), whereas coil components such as the inductor coil and the common-mode coil are often constructed merely by winding enamel-insulated wires. To install such coil components in an inverter-accommodating section formed of an aluminum alloy, therefore, they must be insulated from the inverter-accommodating section. Currently the coil components are installed in the inverter-accommodating section with, for example, insulating silicone sheets laid therein.

EP 1840378 A2 discloses an electric compressor with an inverter assembly that includes a substrate, a capacitor assembly and a coil, a varistor and a base. The inverter assembly is disposed on the periphery of a housing surrounding the electric motor and a compression mechanism. To form the capacitor assembly, a plurality of capacitors are arranged in a case which is a resin-molded accommodating container. Resin is filled into the gaps of the case between the respective capacitors and an inner wall of the case from an open top end of the case. The capacitor assembly has mounting portions with which the base of the inverter-accommodating section supports the capacitor assembly by means of screws.

JP 2003158019 A discloses an electric/electronic component sealed with insulating resins, wherein all parts are housed in a case and are sealed with a low-elasticity resin after a coil composed of a winding and a bobbin and housed in the case is sealed with a first resin having a good adhesive property to the coil.

However, if the coil components are installed in the inverter-accommodating section with, for example, insulating silicone sheets laid therein, as described above, the coil components must be installed by applying an adhesive to sites where the coil components are to be installed in the inverter-accommodating section, laying the insulating silicone sheets, pouring a silicone adhesive therein, and inserting and placing the coil components on the insulating silicone sheets. Hence this method has a problem in that the ease of installation of the coil components is poor and that the silicone sheets have inferior strength and durability and are also expensive.

An object of the present invention, which has been made in light of such circumstances, is to provide an inverter-integrated electric compressor capable of achieving improved ease of installation of a coil component constituting an inverter and increased strength and reduced cost of an insulating member, and also to provide a coil component for the inverter.

To solve the above problems, an inverter-integrated electric compressor of the present invention has the features of claim 1 and a coil component for the inverter has the features of claim 6.

That is, in an inverter-integrated electric compressor according to the present invention, an inverter-accommodating section is disposed on the periphery of a housing into which an electric motor and a compression mechanism are built, and an inverter is accommodated and installed in the inverter-accommodating section to convert DC power into three-phase AC power and supply the power to the electric motor. The inverter-integrated electric compressor includes a resin spacer member having a molded shape surrounding at least the bottom of a coil component constituting the inverter to ensure an insulation distance between the coil component and the inverter-accommodating section when installed in the inverter-accommodating section, and the coil component is fixed to and installed in the inverter-accommodating section with the resin spacer member disposed therebetween.

According to the present invention, the resin spacer member is installed in the inverter-accommodating section, having a molded shape surrounding at least the bottom of the coil component to ensure the insulation distance between the coil component and the inverter-accommodating section when installed in the inverter-accommodating section. The coil component can therefore be fixed to and installed in the inverter-accommodating section with the resin spacer member disposed therebetween so as to surround at least the bottom of the coil component. This improves the ease of installation of the coil component. It is also possible to increase the strength and reduce costs as compared with conventional silicone sheets because the insulating member can be constituted of a spacer member formed of a resin.

An inverter-integrated electric compressor of the present invention may be configured such that, in the above inverter-integrated electric compressor, the coil component is fixed to and installed in the inverter-accommodating section by fixing the coil component and the resin spacer member together and fixing the resin spacer member and the inverter-accommodating section together.

According to this configuration, because the coil component is fixed to and installed in the inverter-accommodating section by fixing the coil component and the resin spacer member together and fixing the resin spacer member and the inverter-accommodating section together by means of, for example, an adhesive or by tight fitting, the coil component, the resin spacer member, and the inverter-accommodating section can be fixed so that no relative displacement occurs between these three components. The coil component can thus be installed stably against, for example, vibrations.

An inverter-integrated electric compressor of the present invention is configured such that the resin spacer member has a hole or gap through which an adhesive can pass.

According to this configuration, because the resin spacer member has the hole or gap through which an adhesive can pass, the resin spacer member and the coil component can be fixed together at the same time by allowing an adhesive for fixing and installing the resin spacer member to enter the interior thereof through the hole or gap. This further improves the ease of installation of the coil component.

An inverter-integrated electric compressor of the present invention may be configured such that, in the above inverter-integrated electric compressor, the coil component and the resin spacer member are integrated by resin molding.

According to this configuration, because the coil component and the resin spacer member are integrated by resin molding, the coil component can be fixed to and installed in the inverter-accommodating section with the resin spacer member integrated with the coil component. This further improves the ease of installation of the coil component.

An inverter-integrated electric compressor of the present invention may be configured such that, in one of the above inverter-integrated electric compressors, the resin spacer member is formed of a molded product of a resin such as polyethylene terephthalate or polybutylene terephthalate.

According to this configuration, because the resin spacer member is formed of a resin-molded product of polyethylene terephthalate or polybutylene terephthalate, the properties of the material can be utilized to enhance the intrinsic function of the resin spacer member, namely, the function of providing insulation between the coil component and the inverter-accommodating section. In addition, the insulating spacer member can be produced at low cost because the material itself is less expensive.

A coil component for an inverter according to the present invention is a coil component, such as an inductor coil or a common-mode coil, for use in an inverter of an electric compressor. The coil component is fitted into a resin spacer member having a molded shape surrounding at least the bottom of the coil component and is integrated therewith by resin molding.

According to the present invention, because the coil component is fitted into the resin spacer member having a molded shape surrounding at least the bottom of the coil component and is integrated therewith by resin molding, no additional insulation measure is needed when the coil component, such as an inductor coil or a common-mode coil, constituting the inverter is mounted at a mounting point on a conductive member, thus simplifying the installation of the coil component and improving ease of installation.

According to the present invention, the resin spacer member has a molded shape surrounding at least the bottom of the coil component, and the coil component can be fixed to and installed in the inverter-accommodating section with the resin spacer member disposed therebetween so as to surround at least the bottom of the coil component. This improves the ease of installation of the coil component and also increases the strength and reduces costs as compared with conventional silicone sheets because the insulating member can be constituted of a spacer member formed of a resin.

### Brief Description of Drawings

[FIG. 1] Fig. 1 is a partial longitudinal sectional view showing, in cutaway view, an inverter-accommodating section of an inverter-integrated electric compressor according to a first embodiment of the present invention.
[FIG. 2] Fig. 2 is a plan view showing, in cutaway view, part of the inverter-accommodating section of the inverter-integrated electric compressor shown in Fig. 1.
[Fig. 3A] Fig. 3 is a plan view of a resin spacer member used for installation of a coil component in the inverter-integrated electric compressor shown in Fig. 1. and a right side view (B) and a bottom view (C).
[Fig. 3B] Fig. 3B is a right side view of the resin spacer member used for installation of a coil component in the inverter-integrated electric compressor shown in Fig. 1.
[Fig. 3C] Fig. 3C is a bottom view of the resin spacer member used for installation of a coil component in the inverter-integrated electric compressor shown in Fig. 1.
[Fig. 4A] Fig. 4A is a perspective view of another form of resin spacer member used for installation of a coil component in an inverter-integrated electric compressor according to a third embodiment of the present invention.
[Fig. 4B] Fig. 4B is a perspective view of another form of resin spacer member used for installation of a coil component in the inverter-integrated electric compressor according to the third embodiment of the present invention.
[Fig. 4C] Fig. 4C is a perspective view of another form of resin spacer member used for installation of a coil component in the inverter-integrated electric compressor according to the third embodiment of the present invention.
[Fig. 4D] Fig. 4D is a perspective view of another form of resin spacer member used for installation of a coil component in the inverter-integrated electric compressor according to the third embodiment of the present invention.

### Explanation of Reference Signs:

- 1:: inverter-integrated electric compressor
- 2:: housing
- 9:: electric motor
- 11:: inverter-accommodating section
- 20:: inverter
- 22:: inductor coil (coil component)
- 26, 36, 46, 56, and 66:: resin spacer member
- 26H:: hole

### Best Mode for Carrying Out the Invention

Embodiments of the present invention will be described below with reference to the drawings.

### First Embodiment

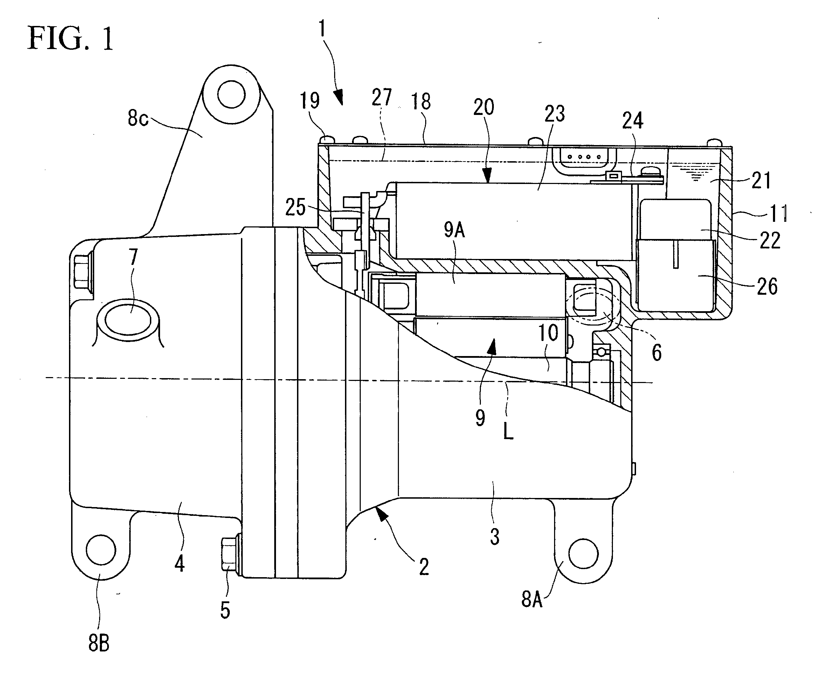

A first embodiment of the present invention will now be described using Figs. 1, 2, and 3A to 3C.

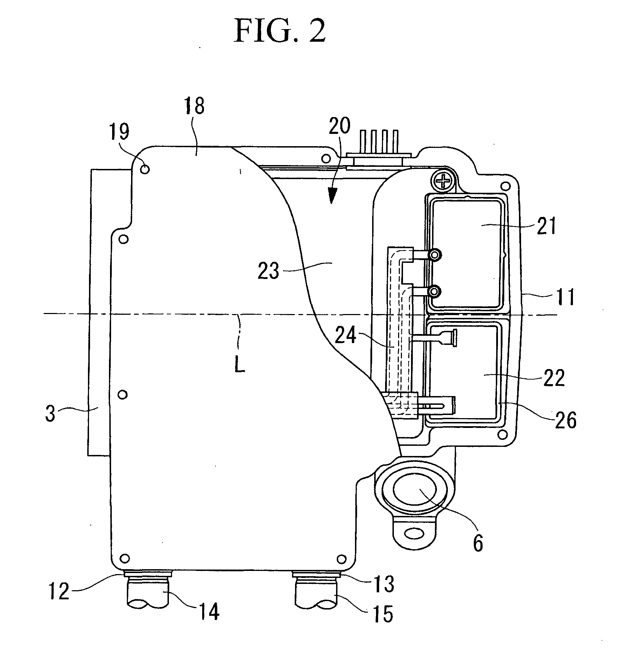

Fig. 1 is a partial longitudinal sectional view showing, in cutaway view, an inverter-accommodating section of an inverter-integrated electric compressor according to the first embodiment of the present invention; Fig. 2 is a plan view showing part of it in cutaway view. An inverter-integrated electric compressor 1 includes a housing 2 forming the outer structure thereof. The housing 2 is constituted by fastening together a motor housing 3 accommodating an electric motor 9 and a compressor housing 4 accommodating a compression mechanism (not shown) with bolts 5. The motor housing 3 and the compressor housing 4 are formed of aluminum die castings.

The electric motor 9 and the compression mechanism (not shown) built into the housing 2 are coupled together via a motor shaft 10 (see Fig. 1) so that the compression mechanism is driven as the electric motor 9 rotates. A refrigerant suction port 6 (see Fig. 2) is provided at one end of the motor housing 3 (to the right of Fig. 1), and a low-temperature, low-pressure refrigerant gas taken into the motor housing 3 through the refrigerant suction port 6 flows beside the electric motor 9 in the direction of a motor axis L and is taken into and compressed by the compression mechanism. The high-temperature, high-pressure refrigerant gas compressed by the compression mechanism is discharged into the compressor housing 4 and is sent outside through a discharge port 7 provided at one end of the compressor housing 4 (to the left of Fig. 1).

The housing 2 has attachment legs 8A, 8B, and 8C at three positions: two on the bottom of one end of the motor housing 3 (to the right of Fig. 1) and on the bottom of one end of the compressor housing 4 (to the left of Fig. 1), and one on the top of the compressor housing 4. The inverter-integrated electric compressor 1 is mounted by fastening the attachment legs 8A, 8B, and 8C with brackets and bolts to, for example, a sidewall of a running motor installed in an engine room of a vehicle. The inverter-integrated electric compressor 1 is usually supported at three top and bottom positions with fastening brackets on one side thereof, the direction of the motor axis L pointing in the front-to-back or left-to-right direction of the vehicle.

In addition, a box-shaped inverter-accommodating section 11 is integrally formed on the top of the periphery of the motor housing 3. Fig. 1 is a partial longitudinal sectional view showing the inverter-accommodating section 11 in cutaway view. The inverter-accommodating section 11, as shown in Figs. 1 and 2, has a box structure constituted of surrounding walls of predetermined height with its top side open, and the top opening is sealed by fastening a cover member 18 using screws 19 with a sealant (not shown) therebetween. The inverter-accommodating section 11 has two power-cable routing holes 12 and 13 on one side thereof so that a high-voltage power supply can be connected to an inverter 20 installed in the inverter-accommodating section 11 via two P-N power cables 14 and 15.

The inverter 20 installed in the inverter-accommodating section 11 is constituted of P-N terminals (not shown) to which the power cables are connected; high-voltage components disposed in the power line, including a smoothing capacitor (capacitor) 21 as well as an inductor coil 22 and a common-mode coil (not shown) (hereinafter simply referred to as coil components 22); an inverter module 23 constituting the principle part of the inverter 20; a bus-bar assembly 24 including a plurality of bus bars, for electrical wiring in the inverter 20, integrated by insert molding using an insulating resin; glass-sealed terminals 25 for supplying the electric motor 9 with three-phase AC power output from the inverter 20 after conversion; and so on.

The above inverter module 23 is constituted by integrating into a module a power substrate on which a plurality of power semiconductor switching devices (power devices such as IGBTs) and a power control circuit for operating them are mounted and a CPU substrate on which control and communication circuits having devices that operate with low voltage, such as a CPU, are mounted (not shown).

In general, the coil components 22 used in the inverter 20 are often constructed merely by winding enamel-insulated wires. To install such coil components 22 in the inverter-accommodating section 11, which is formed of an aluminum die casting, they must be insulated from the inverter-accommodating section 11. In this embodiment, therefore, the coil components 22 are installed by means of resin spacer members (case members) 26 formed of a resin such as polyethylene terephthalate (PET) or polybutylene terephthalate (PBT).

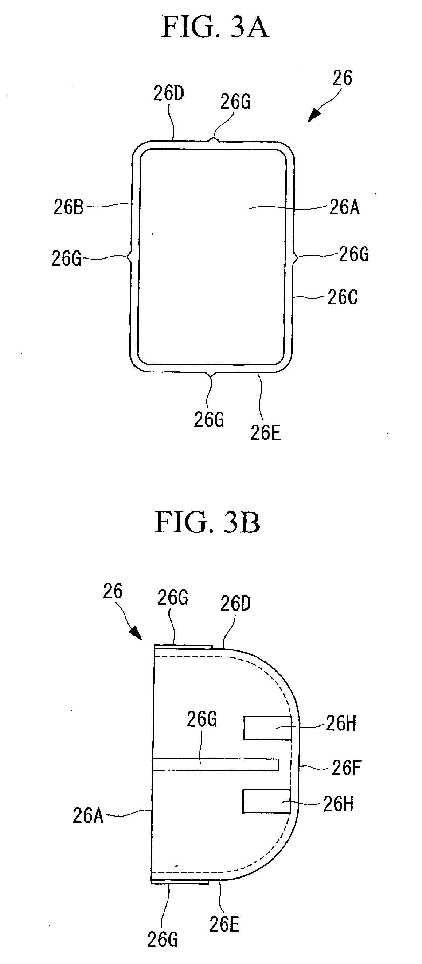

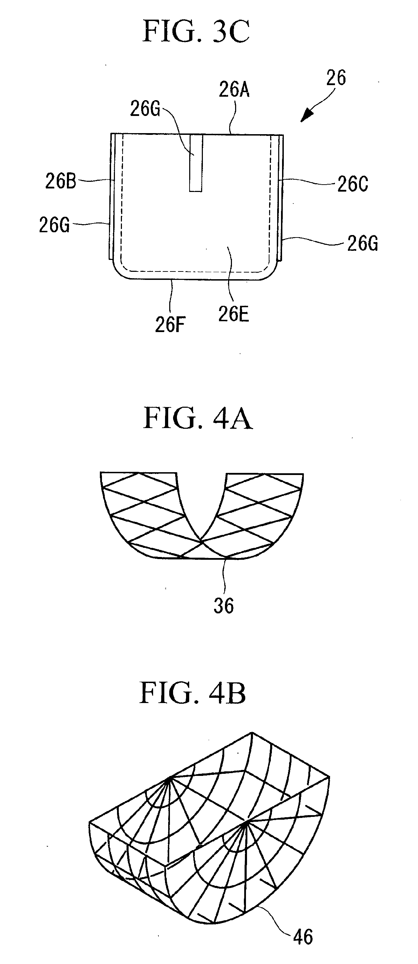

The resin spacer members (case members) 26 have a molded shape surrounding at least the bottoms of the coil components 22 so that they can ensure the required insulation distance between the coil components 22 and the inverter-accommodating section 11 when installed in the inverter-accommodating section 11. Referring to Figs. 3A to 3C, specifically, the resin spacer members (case members) 26 are formed in the shape of a case in which substantially the lower halves of the coil components 22, which have a cylindrical shape, can be fitted. That is, the resin spacer members (case members) 26 are formed in a case shape with a rectangular cross-section whose top surface is constituted by an opening plane 26A and whose wall surfaces are constituted by four side surfaces 26B to 26E and a bottom surface 26F, having smoothly curved surfaces at the two lower corners.

The resin spacer members (case members) 26 have ribs 26G extending vertically across the individual side surfaces 26B to 26E to ensure sufficient strength and an appropriate number of holes 26H in the side surfaces 26B and 26C (two for each side surface in this embodiment) so that an adhesive can enter the interiors of the case-shaped resin spacer members 26. Forming the holes 26H has no effect on ensuring the insulation distance.

After the inverter 20 is installed in the inverter-accommodating section 11, its inner space is filled with a vibration-proofing, moisture-proofing potting gel 27 with an air layer of certain size left on its top side to accommodate thermal expansion. The inverter-accommodating section 11 is configured such that it is sealed with the cover member 18 after being filled with the potting gel 27.

According to this embodiment, the configuration described above has the following effects and advantages.

The above inverter-integrated electric compressor 1 operates as follows. The inverter 20 converts DC power supplied from the high-voltage power supply via the power cables 14 and 15 into three-phase AC power of predetermined frequency corresponding to the air conditioning load and supplies the power to the electric motor 9 via the glass-sealed terminals 25, so that the electric motor 9 can rotate. The compression mechanism is thus driven, thereby compressing a low-temperature, low-pressure refrigerant gas taken through the refrigerant suction port 6 provided at one end of the motor housing 3 to a high-temperature, high-pressure state. This high-temperature, high-pressure compressed gas is discharged into the compressor housing 4 and is sent from there to the outside through the discharge port 7.

The low-temperature, low-pressure refrigerant gas taken into the housing 2 through the refrigerant suction port 6 is drawn into a space between one end of the motor housing 3 and the electric motor 9, flows from there into the compressor housing 4 past the stator periphery of the electric motor 9, and is drawn into the compression mechanism. Meanwhile, the exothermic devices used as the components of the inverter 20 installed in the inverter-accommodating section 11, including the power devices such as IGBTs, the smoothing capacitor (capacitor) 21, and the inductor coil 22, are cooled from inside the housing 2 via the circumferential wall of the motor housing 3.

In the installation of the inverter 20, additionally, the coil components 22, such as the inductor coil and the common-mode coil, can be installed by fixing and installing the resin spacer members (case members) 26 in the inverter-accommodating section 11 with a silicone adhesive and inserting the coil components 22 therein. The coil components 22 are then fixed to the resin spacer members 26 with the silicone adhesive for fixing the resin spacer members 26 that has entered the interiors of the resin spacer members 26 through the holes 26H, if necessary, in combination with a silicone adhesive injected into the resin spacer members 26. After the installation of the inverter 20 is thus completed, the inverter-accommodating section 11 is filled with the vibration-proofing, moisture-proofing potting gel 27 and is sealed with the cover member 18.

According to this embodiment, the coil components 22, which are inserted into the resin spacer members (case members) 26, can be fixed to and installed in the inverter-accommodating section 11 with the resin spacer members 26 disposed therebetween so as to ensure the required insulation distance. This improves the ease of installation of the coil components 22 as compared with a conventional method in which the coil components 22 are installed by laying insulating sheets and placing the coil components 22 thereon. It is also possible to significantly increase the strength and reduce costs as compared with conventional silicone sheets because the insulating members can be constituted of the spacer members 26, which are formed of a resin.

In addition, the coil components 22 can be fixed and installed stably against, for example, vibrations because the coil components 22, the resin spacer members 26, and the inverter-accommodating section 11 are fixed to each other with an adhesive. In addition, the coil components 22 can be fixed to the resin spacer members 26 with the adhesive for fixing the resin spacer members 26 because the adhesive can enter the interiors thereof through the holes 26H provided in the resin spacer members 26. This enables efficient installation of the coil components 22, thus improving the ease of installation. Instead of the adhesive, the coil components 22 can be fixed to the resin spacer members 26 mechanically, such as by tight fitting.

In addition, because the resin spacer members (case members) 26 are formed of molded products of a resin such as polyethylene terephthalate or polybutylene terephthalate, the properties of the material can be utilized to enhance the intrinsic function of the resin spacer members 26, namely, the function of providing insulation between the coil components 22 and the inverter-accommodating section 11. In addition, the insulating spacer members 26 can be produced at low cost because the material itself is less expensive.

### Second Embodiment

Next, a second embodiment of the present invention will be described.

This embodiment differs from the first embodiment described above in the configuration of the coil components 22. The other features are identical to those of the first embodiment, and therefore a description thereof will be omitted.

In this embodiment, the coil components 22 and the resin spacer members (case members) 26, which have a molded shape surrounding at least the bottoms thereof, are integrated by resin molding in advance.

If the coil components 22 and the resin spacer members 26 are integrated by resin molding in advance, as described above, the coil components 22 can be installed in the inverter-accommodating section 11 by fixing and installing the resin spacer members 26 integrated with the coil components 22 in the inverter-accommodating section 11. Thus, the use of the coil components 22 integrated with the insulating resin spacer members 26 by molding further improves the ease of installation of the coil components 22.

### Third Embodiment

Next, a third embodiment of the present invention will be described using Figs. 4A to 4D.

This embodiment differs from the first and second embodiments described above in the configuration of the resin spacer members 26. The other features are identical to those of the first and second embodiments, and therefore a description thereof will be omitted.

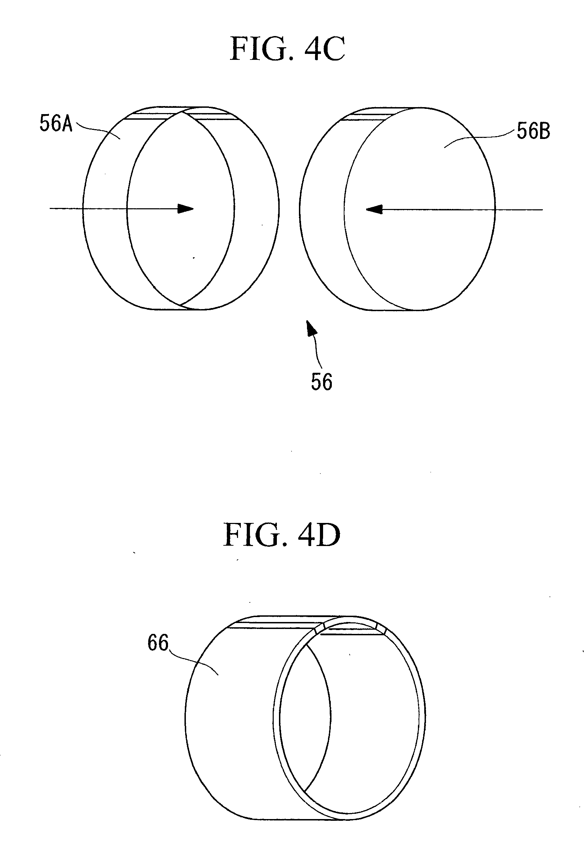

In this embodiment, the resin spacer members have modified shapes as shown in Figs. 4A to 4D. Fig. 4A shows a meshed, semicircular resin spacer member 36. Fig. 4B shows a meshed, basket-shaped resin spacer member 46. Fig. 4C shows a resin spacer member 56 composed of a pair of left and right cup-shaped members 56A and 56B with the coil components 22 held between the sides thereof. Fig. 4D shows a cup-shaped resin spacer member 66 having an opening on one side thereof.

The same effects and advantages as the first and second embodiments described above can also be achieved using the resin spacer members 36, 46, 56, and 66, which have the shapes described above so that they can surround at least the bottoms of the coil components 22. The resin spacer members permit various other modifications.

The present invention is not limited to the invention according to the above embodiments. The compression mechanism provided in the compressor housing 4, for example, may be any type of compression mechanism, such as a rotary type, a scroll type, or a swash-plate type, and is not particularly limited. In addition, the inverter 20 and its placement and configuration are not limited to the above embodiments, and various modifications are permitted, including installing the smoothing capacitor (capacitor) 21 and the inductor coil 22 on the side surfaces of the inverter-accommodating section 11 (on the back surface in the above embodiments). In addition, the material of the resin spacer members is not limited to PET and PBT, as described above, and resins with similar properties can be used.

## Claims

1. An inverter-integrated electric compressor (1) wherein an inverter-accommodating section (11) is disposed on the periphery of a housing (2) into which an electric motor (9) and a compression mechanism are built and wherein an inverter (20) is accommodated and installed in the inverter-accommodating section (11) to convert DC power into three-phase AC power and supply the power to the electric motor (9),
the inverter-integrated electric compressor (1) including a resin spacer member (26) having a molded shape surrounding at least the bottom of a coil component (22) being a constituent of the inverter (20) to ensure an insulation distance between the coil component (22) and the inverter-accommodating section (11) when installed in the inverter-accommodating section (11), the coil component (22) being fixed to and installed in the inverter-accommodating section (11) with the resin spacer member (26) disposed therebetween, wherein the resin spacer member (26) has a hole or gap (26H) in a side surface (26B, 26C) thereof through which an adhesive can pass and enter the interior of the resin spacer member (26).

2. The inverter-integrated electric compressor (1) according to claim 1, wherein the coil component (22) is fixed to and installed in the inverter-accommodating section (26) by having fixed the coil component (22) and the resin spacer member (26) together and having fixed the resin spacer member (26) and the inverter-accommodating section (11) together.

3. The inverter-integrated electric compressor (1) according to claim 1, wherein the coil component (22) and the resin spacer member (26) are integrated by resin molding.

4. The inverter-integrated electric compressor (1) according to claim 3, wherein the resin spacer member (26) has a molded shape including a bottom surface (26F) having smoothly curved surfaces at the two lower corners in which the lower halves of the coil component (22) which have a cylindrical shape are fitted such that at least the bottom of the coil component (22) is surrounded and integrated therewith by the resin molding.

5. The inverter-integrated electric compressor (1) according to one of claims 1 to 4, wherein the resin spacer member (26) is formed of a molded product of a resin such as polyethylene terephthalate or polybutylene terephthalate.

6. A coil component comprising a coil (22), such as an inductor coil or a common-mode coil and a resin spacer member (26), for use in an inverter (20) of an electric compressor (1),
wherein the coil component (22) for an inverter (20) is fitted into the resin spacer member (26) having a molded shape surrounding at least the bottom of the coil component (22) and is integrated therewith by resin molding, wherein the resin spacer member (26) has a hole or gap (26H) in a side surface (26B, 26C) thereof through which the resin adhesive has passed and entered the interior of the resin spacer member (26).

7. The coil component (22) according to claim 6, wherein the resin spacer member (26) has a molded shape including a bottom surface (26F) having smoothly curved surfaces at the two lower corners in which the lower halves of the coil component (22) which have a cylindrical shape are fitted such that at least the bottom of the coil component (22) is surrounded and integrated therewith by the resin molding.

## Patentansprüche

1. Ein elektrischer Kompressor mit integriertem Umrichter (1), wobei ein Aufnahmeabschnitt für einen Umrichter (11) an der Peripherie eines Gehäuses (2), in welches ein elektrischer Motor (9) und ein Kompressionsmechanismus eingebaut sind, angeordnet ist, und wobei ein Umrichter (20) in dem Aufnahmeabschnitt für den Umrichter (11) aufgenommen und installiert ist, um Gleichspannungsleistung in Dreiphasen-Wechselspannungsleistung zu konvertieren und die Leistung zu dem elektrischen Motor (9) zuzuführen,
wobei der elektrische Kompressor mit integriertem Umrichter (1) ein Harz-Abstandhalteelement (26) mit einer Formgestalt aufweist, die mindestens den Boden einer Spulenkomponente (22) umgibt, welche ein Bestandteil des Umrichters (20) ist, um einen Isolationsabstand zwischen der Spulenkomponente (22) und dem Umrichter-Aufnahmeabschnitt (11) sicherzustellen, wenn diese in den Umrichter-Aufnahmeabschnitt (11) eingebaut ist, wobei die Spulenkomponente (22) an dem Umrichter-Aufnahmeabschnitt (11) mit dem dazwischen angeordneten Harz-Abstandhalteelement (26) befestigt und darin installiert ist, wobei das Harz-Abstandhalteelement (26) ein Loch oder einen Zwischenraum (26H) in einer Seitenfläche (26B, 26C) desselben besitzt, durch das bzw. den ein Adhäsiv treten und in das Innere des Harz-Abstandhalteelements (26) eintreten kann.

2. Der elektrische Kompressor mit integriertem Umrichter (1) gemäß Anspruch 1, wobei die Spulenkomponente (22) an dem Umrichter-Aufnahmeabschnitt (26) befestigt und darin installiert ist, indem die Spulenkomponente (22) und das Harz-Abstandhalteelement (26) zusammen befestigt sind und indem das Harz-Abstandhalteelement (26) und der Umrichter-Aufnahmeabstand (11) aneinander befestigt sind.

3. Der elektrische Kompressor mit integriertem Umrichter (1) gemäß Anspruch 1, wobei die Spulenkomponente (22) und das Harz-Abstandhalteelement (26) durch Harz-Ausformen integriert sind.

4. Der elektrische Kompressor mit integriertem Umrichter (1) gemäß Anspruch 3, wobei das Harz-Abstandhalteelement (26) eine ausgeformte Form mit einer Bodenfläche (26F) mit sanft gekrümmten Oberflächen an den zwei unteren Ecken besitzt, in welchen die unteren Hälften der Spulenkomponente (22), die eine zylindrische Form besitzen, eingesetzt sind, derart, dass mindestens der Boden der Spulenkomponente (22) von der Harz-Ausformung umgeben und damit integriert ist.

5. Der elektrische Kompressor mit integriertem Umrichter (1) gemäß einem der Ansprüche 1 bis 4, wobei das Harz-Abstandhalteelement (26) aus einem geformten Produkt eines Harzes wie Polyethylen-Terephthalat oder PolybutylenTerephthalat gebildet ist.

6. Eine Spulenkomponente mit einer Spule (22), beispielsweise einer Induktionsspule oder einer Gleichtaktspule, und einem Harz-Abstandhalteelement (26), zur Verwendung in einem Umrichter (20) eines elektrischen Kompressors (1),
wobei die Spulenkomponente (22) für einen Umrichter (20) in das Harz-Abstandhalteelement (26) mit einer ausgeformten Form eingesetzt ist, die mindestens den Boden der Spulenkomponente (22) umgibt und damit durch Harzausformung integriert ist, wobei das Harz-Abstandhalteelement (26) ein Loch oder einen Zwischenraum (26H) in einer Seitenfläche (26B,26C) desselben besitzt, durch das bzw. den das Harz-Adhäsiv gelangt und in das Innere des Harz-Abstandhalteelements (26) eingetreten ist.

7. Die Spulenkomponente (22) gemäß Anspruch 6, wobei das Harz-Abstandhalteelement (26) eine ausgeformte Form besitzt mit einer Bodenfläche (26F) mit sanft gekrümmten Oberflächen an den zwei unteren Ecken, in denen die unteren Hälften der Spulenkomponente (22), welche eine zylindrische Form besitzen, eingesetzt sind, derart, dass mindestens der Boden der Spulenkomponente (22) von der Harzausformung umgeben und damit integriert ist.

## Revendications

1. Compresseur électrique (1) à inverseur intégré, dans lequel une section de logement d'inverseur (11) est disposée sur la périphérie d'un boîtier (2) dans lequel un moteur électrique (9) et un mécanisme de compression sont intégrés, et dans lequel un inverseur (20) est logé et installé dans la section de logement d'inverseur (11) pour convertir le courant continu en courant alternatif triphasé et alimenter le moteur électrique (9) en courant,
le compresseur électrique (1) à inverseur intégré comprenant un élément d'espacement en résine (26) ayant une forme moulée entourant au moins le fond d'un composant de bobine (22) qui est un constituant de l'inverseur (20) pour garantir une distance d'isolation entre le composant de bobine (22) et la section de logement d'inverseur (11) lorsqu'il est installé dans la section de logement d'inverseur (11), le composant de bobine (22) étant fixé sur et installé dans la section de logement d'inverseur (11) avec l'élément d'espacement en résine (26) disposé entre eux, dans lequel l'élément d'espacement en résine (26) a un trou ou un espace (26H) dans sa surface latérale (26B, 26C) à travers lequel un adhésif peut passer et entrer à l'intérieur de l'élément d'espacement en résine (26).

2. Compresseur électrique (1) à inverseur intégré selon la revendication 1, dans lequel le composant de bobine (22) est fixé sur et installé dans la section de logement d'inverseur (26) en ayant le composant de bobine (22) et l'élément d'espacement en résine (26) fixés ensemble et en ayant l'élément d'espacement en résine (26) et la section de logement d'inverseur (11) fixés ensemble.

3. Compresseur électrique (1) à inverseur intégré selon la revendication 1, dans lequel le composant de bobine (22) et l'élément d'espacement en résine (26) sont intégrés par moulage de résine.

4. Compresseur électrique (1) à inverseur intégré selon la revendication 3, dans lequel l'élément d'espacement en résine (26) a une forme moulée comprenant une surface inférieure (26F) ayant des surfaces légèrement incurvées au niveau des deux coins inférieurs dans lesquels les moitiés inférieures du composant de bobine (22) qui ont une forme cylindrique sont montées de sorte qu'au moins le fond du composant de bobine (22) est entouré et intégré avec ce dernier par le moulage de résine.

5. Compresseur électrique (1) à inverseur intégré selon l'une des revendications 1 à 4, dans lequel l'élément d'espacement en résine (26) est formé avec un produit moulé d'une résine telle que le polyéthylène téréphtalate ou le polybutylène téréphtalate.

6. Composant de bobine comprenant une bobine (22), telle qu'une bobine d'induction ou une bobine en mode commun et un élément d'espacement en résine (26), destiné à être utilisé dans un inverseur (20) d'un compresseur électrique (1),
dans lequel le composant de bobine (22) pour un inverseur (20) est monté dans l'élément d'espacement en résine (26) ayant une forme moulée entourant au moins le fond du composant de bobine (22) et est intégré avec ce dernier par moulage de résine, dans lequel l'élément d'espacement en résine (26) a un trou ou espace (26H) dans sa surface latérale (26B, 26C) à travers lequel l'adhésif en résine est passé et a pénétré à l'intérieur de l'élément d'espacement en résine (26).

7. Composant de bobine (22) selon la revendication 6, dans lequel l'élément d'espacement en résine (26) a une forme moulée comprenant une surface inférieure (26F) ayant des surfaces légèrement incurvées au niveau des deux coins inférieurs dans lesquels les moitiés inférieures du composant de bobine (22) qui ont une forme cylindre sont montées de sorte qu'au moins le fond du composant de bobine (22) est entouré et intégré avec ce dernier par moulage de résine.
